# EUROPEAN PATENT APPLICATION

(11) **EP 1 908 611 A1**
(43) Date of publication of application: **09.04.2008**
(21) Application number: 06781788.2
(22) Date of filing: 27.07.2006
(51) Int. Cl.: B60C 17/06

(54) **RUN-FLAT SUPPORT BODY, PNEUMATIC TIRE WITH RUN-FLAT SUPPORT BODY, AND METHOD OF PRODUCING THE TIRE**

(30) Priority: 28.07.2005 JP 2005218779
(71) Applicant: The Yokohama Rubber Co., Ltd., Minato-ku Tokyo 105-8685 (JP)
(72) Inventor: NAITO, Mitsuru, c/o The Yokohama Rubber Co., Ltd., Hiratsuka-shi, Kanagawa 254-8601 (JP)
(74) Representative: HOFFMANN EITLE
(86) International application number: PCT/JP2006/314877
(87) International publication number: WO 2007/013553

(57) **Abstract**

A run-flat support member having an annular shell for supporting a tread portion when a pneumatic tire is operated in a run-flat condition. The annular shell is formed from a shell body which is annularly curved and has opposite circumferential edges that are butted against each other and are joined. The shell body is structured such that the butted opposite circumferential edges come into contact with each other by forces acting in directions where they are butted against each other.

## Description

### TECHNICAL FIELD

The present invention relates to a run-flat support member for supporting a pneumatic tire during run-flat operation, a pneumatic tire with the run-flat support member, and a method of producing thereof, and more particularly, to a run-flat support member capable of reducing weight by eliminating a coupling member, making the weight distribution even in the circumferential direction, and increasing reliability, to a pneumatic tire with the run-flat support member, and to a method of producing thereof.

### TECHNICAL BACKGROUND

In response to demands in the market, there have been proposed many technologies which allow a vehicle to urgently travel when a pneumatic tire is punctured during traveling. These many proposals include one that allows for run-flat operation by supporting a punctured pneumatic tire with an annular run-flat support member, which is mounted on a rim in the cavity of the tire seated on the rim (see a patent document 1, for example).

The above run-flat support member comprises an annular shell having a support surface for a punctured tire on the radially outer side, and ring-shaped elastic rings attached to the annular shell, and is designed to be mounted on a rim through the elastic rings. This run-flat support member allows existing wheels to be used without adding any specific modifications to their rims, and can therefore be advantageously adopted without causing confusions in the market.

In a case of a run-flat support member used for a tire having a high tire profile, however, since the annular shell is greater in outer diameter, it is difficult to insert it into the cavity of the tire with no change. Therefore, there has been proposed a technique such that the run-flat support member is cut at one location in the circumferential direction and inserted into the cavity of the tire in the cut state, and thereafter, the portions with the cut of the cut annular shell are coupled to each other with a coupling member (see patent documents 2, 3 and 4, for example).

As mentioned above, use of the coupling member, however, goes against weight saving which has been strongly demanded in recent years, and there is a problem of an increase in weight. Further, since a weight distribution in the circumferential direction of the run-flat support member becomes uneven, a tire with the run-flat support member has an increase in vibration and noise, thereby lowering ride comfort. Furthermore, there is a risk that the coupling member comes away from the annular shell due to vibration, shock, etc., and there is a problem of lacking reliability.
Patent Document 1: Japanese Patent Application Kokai Publication HEI 10-297226
Patent Document 2: Japanese Patent Application Kokai Publication 2003-48410
Patent Document 3: Japanese Patent Application Kokai Publication 2004-58866
Patent Document 4: Japanese Patent Application Kokai Publication 2004-181987

### DISCLOSURE OF THE INVENTION

An object of the present invention is to provide a run-flat support member capable of reducing weight by eliminating a coupling member, making the weight distribution even in the circumferential direction, and increasing reliability, to provide a pneumatic tire with the run-flat support member, and to provide a method of producing thereof.

A run-flat support member according to the present invention for achieving the above object is characterized in that, in a run-flat support member having an annular shell for supporting a tread portion when a pneumatic tire is operated in a run-flat condition, said annular shell is formed from a shell body which is annularly curved and has opposite circumferential edges that are butted against each other and are joined, and that the shell body is structured such that said butted opposite circumferential edges come into contact with each other by forces acting in directions where they are butted against each other.

A pneumatic tire with a run-flat support member according to the present invention is a pneumatic tire with a run-flat support member comprising a pneumatic tire and a run-flat support member in a cavity of the pneumatic tire, the run-flat support member having an annular shell for supporting a tread portion when the pneumatic tire is operated in a run-flat condition, characterized in that said annular shell is formed from a shell body which is annularly curved and has opposite circumferential edges that are butted against each other and are joined, and that the shell body is structured such that said butted opposite circumferential edges come into contact with each other by forces acting in directions where they are butted against each other.

A method of producing a pneumatic tire with a run-flat support member according to the present invention is a method of producing a pneumatic tire with a run-flat support member comprising a pneumatic tire and a run-flat support member in a cavity of the pneumatic tire, the run-flat support member having an annular shell for supporting a tread portion when the pneumatic tire is operated in a run-flat condition, said annular shell being formed from a shell body which is annularly curved and has opposite circumferential edges that are butted against each other and are joined, the shell body being structured such that said butted opposite circumferential edges come into contact with each other by forces acting in directions where they are butted against each other, the method comprising the steps of inserting an annularly curved shell body into the cavity of the pneumatic tire; contacting opposite circumferential edges of the shell body with each other in a butting manner by forces acting in directions where they are butted against each other; and joining the opposite circumferential edges of the shell body in the butting manner.

According to the present invention described above, since the shell body constituting the annular shell is structured such that the butted opposite circumferential edges come into contact with each other by the forces acting in the directions where they are butted against each other, it is possible to keep the opposite circumferential edges in a butted state without using a fixing tool with a complicated machine or a large scale in the narrow cavity of the pneumatic tire, and to join them. Therefore, since a conventionally used coupling member can be eliminated, weight is reduced, the circumferential weight distribution can be made even, and reliability can be enhanced.

### BRIEF DESCRIPTION OF THE DRAWINGS

FIG. 1 is a cross-sectional view showing an embodiment of a pneumatic tire with a run-flat support member according to the present invention in a state where it is assembled to a rim.
FIG. 2 is a partial enlarged perspective view showing a portion of the run-flat support member of FIG. 1 that is cut away.
FIG. 3 is a side view of the run-flat support member of FIG. 1
FIG. 4 is a partial side view for explaining operation of a shell body.
FIG. 5 is a main enlarged cross-sectional view showing another example of the shell body.
FIG. 6 is a partial plain view of the shell body in a state where the circumferential opposite ends of the shell body are not lined up.

### BEST MODES FOR CARRYING OUT THE INVENTION

Embodiments of the present invention will be described in detail below with reference to the attached drawings.

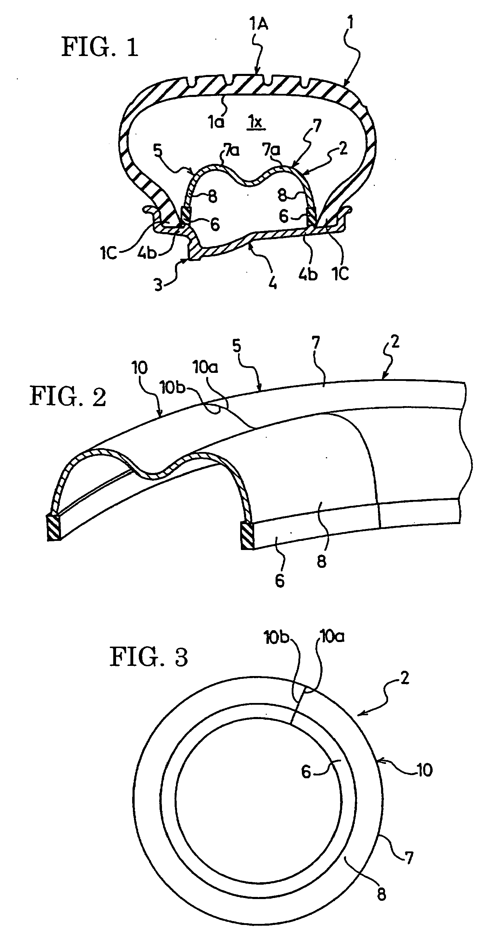

FIG. 1 shows an embodiment of a pneumatic tire with a run-flat support member according to the present invention; reference numeral 1 denotes a pneumatic tire, and reference numeral 2 denotes an annular run-flat support member disposed in the cavity 1x of the pneumatic tire 1. The pneumatic tire 1 and run-flat support member 2 are shown in a state where they are mounted on the rim 4 of a wheel 3.

The run-flat support member 2 comprises an annular shell 5 annularly formed of a rigid material for supporting the weight of a vehicle via a punctured tire, and right and left elastic members 6 formed of an elastic material such as rubber, elastic resin, etc. in the shape of a ring for stably supporting the annular shell 5 with respect to the rim 4.

As the rigid material of the annular shell 5, metal such as high-tensile steel, stainless steel, aluminum alloy and magnesium alloy can be mentioned. The rubber or elastic resin for the elastic members 6 may be any one if the annular shell 5 can be stably supported; as the rubber, natural rubber, isoprene rubber, styrene-butadiene rubber, butadiene rubber or butyl rubber, for example, can be mentioned, and as the elastic resin, resin foam such as polyurethane foam, for example, can be mentioned.

The annular shell 5 is formed with an outer diameter smaller than the diameter of the inner surface 1a of the tread portion 1A of the pneumatic tire 1 in order to keep a certain distance between the inner surface 1a and the annular shell. The annular shell has a support surface 7 on the radially outer side with two convexly curved surface sections 7a arranged widthwisely of the shell. This support surface 7 is spaced apart from the inner surface 1a of the tread portion 1A of the pneumatic tire 1 when the pneumatic tire 1 is normally operated. However, when the pneumatic tire is punctured and operated in a run-flat condition, the support surface comes into contact with the inner surface 1a of the tread portion 1A and supports the tread portion 1A.

The convexly curved surface sections 7a may be one or three or more. The convexly curved surface sections 7a are preferably formed such that two or more convexly curved surface sections are arranged as shown in the drawings, whereby the support surface 7 has two or more dispersed contact places with respect to the inner surface 1a of the pneumatic tire 1, enabling localized wear given to the inner surface 1a to be reduced..

The annular shell 5 has two sidewalls on the radially inner side, the sidewalls being open as leg portions 8, respectively. The elastic members 6 are attached to the radially inner sides of the leg portions. The right and left elastic members 6 fit to the right and left bead seats 4b of the rim 4 to thereby support the annular shell 5 on the rim 4. The right and left elastic members 6 not only moderate the shock and vibration of the annular shell 5 receiving from the punctured tire, but also prevent slipping with respect to the bead seats 4b to stably support the annular shell 5. The elastic members 6 have inner diameters which are substantially the same in size as the inner diameters of the bead portions 1C of the pneumatic tire 1.

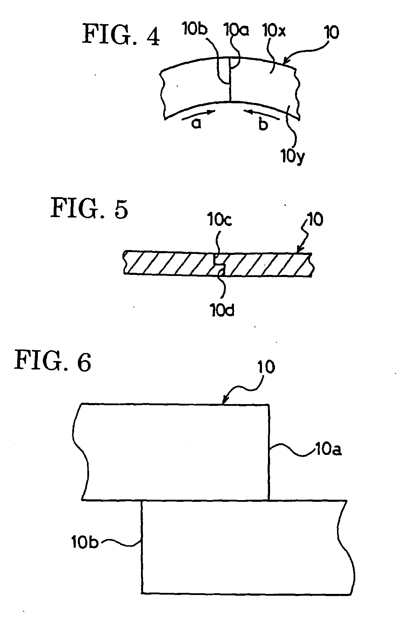

The above annular shell 5 is formed from a plate-shaped metallic shell body having the above support surface 7 and two leg portions 8, the shell body being annularly curved as shown in FIGS. 2 and 3 and having opposite circumferential edges 10a and 10b which are butted against each other and are joined by welding from the radially inner side. The shell body 10 is structured such that the butted opposite circumferential edges 10a and 10b come into contact with each other by forces acting in directions where they are butted against each other, as shown by arrows a and b in FIG. 4, when the opposite circumferential edges 10a and 10b are butted against each other in a state before joining by welding. The forces acting in the butted directions is preferably equal to or less than 100 N, whereby an operator can easily make an operation of butting the opposite circumferential edges 10a and 10b against each other in the cavity 1x of the tire.

The shell body 10 structured as described above can be obtained, for example, as follows. First, a metallic cylinder is formed which has a middle diameter between the outer diameter and inner diameter of the annular shell 5. This metallic cylinder can be obtained, for example, by producing a long metallic cylinder according to a drawing process and by cutting it to a predetermined length. Alternatively, the cylinder can be obtained by cylindrically winding a belt-like metallic plate cut to a prescribed length in advance to butt its ends against each other, and by joining the butted ends by arc welding, laser welding or the like.

Next, the center side, in the widthwise direction, of the cylinder corresponding to a portion of the shell body 10 located on its radially outer side is stretched radially outward. In doing so, the center side, in the widthwise direction, of the cylinder is subjected to a stretching process so as to be greater than the outer diameter of the shell body. On the other hand, the opposite end sides, in the widthwise direction, of the cylinder corresponding to portions of the shell body 10 located on its radially inner side are drawn radially inward. In doing so, the opposite end sides, in the widthwise direction, of the cylinder are subjected to a drawing process so as to be less than the inner diameter of the shell body.

Then, the center side, in the widthwise direction, of the cylinder is subjected to a drawing process, and the opposite end sides, in the widthwise direction, of the cylinder are subjected to a stretching process to form an annular shell body having the same shape as the annular shell 5. This annular shell body is cut at one location in its circumferential direction to obtain the shell body 10. The shell body 10 obtained as described above has a radially outer portion 10x to which residual stress is given in a stretching direction in the circumferential direction, and a radially inner portion 10y to which residual stress is given in a shortening direction in the circumferential direction. Therefore, the butted opposite circumferential edges 10a and 10b come into contact with each other by forces acting in directions where they are butted against each other.

The shell body 10 is preferably formed with opposite circumferential edge faces 10c and 10d which are uneven faces having a recess and a protrusion in engagement with each other, which enables an operator to easily make a butting operation.

A pneumatic tire with a run-flat support member having the above-described run-flat support member 2 in the cavity 1x of the pneumatic tire 1 will be produced as follows.

First, an annularly curved shell body 10 is prepared. This is obtained, for example, as described above, by giving stretching processes and drawing processes to a metallic cylinder having a middle diameter between the outer diameter and inner diameter of the annular shell 5 to form an annular shell body having the same shape as the annular shell 5 with the support surface 7 and the two leg portions 8, and by cutting this annular shell body at one location in its circumferential direction.

Belt-like elastic members 6 are respectively attached to the two leg portions 8 of the obtained shell body 10 over its substantially entire length. If the elastic members 6 are formed of rubber, for example, the elastic members 6 are adhered to the two leg portions 8 of the shell body 10 by vulcanization. Next, the shell body 10 with the elastic members 6 is inserted into the cavity 1x of a pneumatic tire 1 in a state where the opposite circumferential edges 10a and 10b of the shell body 10 are not butted but are displaced (see FIG. 6).

Then, the opposite circumferential edges 10a and 10b of the inserted shell body 10 are contacted with each other in a butting manner. Since the coupled opposite ends of the shell body 10 have forces acting in directions where they are butted against each other, the opposite circumferential edges 10a and 10b of the shell body 10 are butted against each other without using any fixing tool, and the state is kept. In this state, the opposite circumferential edges 10a and 10b of the shell body 10 are joined by welding from its radially inner side in a butting manner, obtaining a pneumatic tire with a run-flat support member.

As the welding used here, laser welding is preferably used. The laser welding can focus energy on a very narrow area, and can limit an influence of heat given to the surrounding of the welded part to a very narrow region, thus not badly influencing properties of the run-flat support member 2.

According to the present invention described above, since the shell body 10 constituting the annular shell 5 is structured such that the butted opposite circumferential edges 10a and 10b come into contact with each other by the forces acting in the directions where they are butted against each other, it is possible to keep the opposite circumferential edges 10a and 10b of the shell body 10 in a butted state without using a tool for fixing the opposite circumferential edges 10a and 10b in a butted state, and to join them by welding. Accordingly, a coupling member can be eliminated, thereby reducing weight and enabling the circumferential weight distribution to be even, and reliability can be enhanced.

In the present invention, the shell body 10 is preferably formed of metal as described above. However, in the alternative of the metal, rigid resins such as thermoplastic resins including nylon and polyester resins, etc., or thermosetting resins including phenol resins, epoxy resins, etc. may be used. In the case where the thermoplastic resins are used, the opposite circumferential edges 10a and 10b of the shell body 10 can be easily joined by using ultrasonic fusion or other methods. In the case where the thermosetting resins are used, the opposite circumferential edges 10a and 10b of the shell body 10 can be easily joined by applying an adhesive agent of the same resin to the joined portions and by heating the joined portions to which the adhesive agent has been applied.

### INDUSTRIAL APPLICABILITY

The run-flat support member of the present invention having the aforementioned excellent effects can be very effectively utilized as a run-flat support member which supports a pneumatic tire during run-flat operation.

## Claims

1. A run-flat support member having an annular shell for supporting a tread portion when a pneumatic tire is operated in a run-flat condition, said annular shell being formed from a shell body which is annularly curved and has opposite circumferential edges that are butted against each other and are joined, the shell body being structured such that said butted opposite circumferential edges come into contact with each other by forces acting in directions where they are butted against each other.

2. A run-flat support member according to claim 1, wherein the forces acting in said butted directions are equal to or less than 100 N.

3. A run-flat support member according to claim 1 or 2, where said shell body is formed of metal.

4. A pneumatic tire with a run-flat support member comprising a pneumatic tire and a run-flat support member in a cavity of the pneumatic tire, the run-flat support member having an annular shell for supporting a tread portion when the pneumatic tire is operated in a run-flat condition, said annular shell being formed from a shell body which is annularly curved and has opposite circumferential edges that are butted against each other and are joined, the shell body being structured such that said butted opposite circumferential edges come into contact with each other by forces acting in directions where they are butted against each other.

5. A pneumatic tire with a run-flat support member according to claim 4, wherein the forces acting in said butted directions are equal to or less than 100 N.

6. A pneumatic tire with a run-flat support member according to claim 4 or 5, wherein said shell body is formed of metal.

7. A method of producing a pneumatic tire with a run-flat support member comprising a pneumatic tire and a run-flat support member in a cavity of the pneumatic tire, the run-flat support member having an annular shell for supporting a tread portion when the pneumatic tire is operated in a run-flat condition, said annular shell being formed from a shell body which is annularly curved and has opposite circumferential edges that are butted against each other and are joined, the shell body being structured such that said butted opposite circumferential edges come into contact with each other by forces acting in directions where they are butted against each other, the method comprising the steps of:
inserting an annularly curved shell body into the cavity of the pneumatic tire;
contacting the opposite circumferential edges of the shell body with each other in a butting manner by forces acting in directions where they are butted against each other; and
joining the opposite circumferential edges of the shell body in the butting manner.

8. A method of producing a pneumatic tire with a run-flat support member according to claim 7, wherein the forces acting in said butted directions are equal to or less than 100 N.

9. A method of producing a pneumatic tire with a run-flat support member according to claim 7 or 8, wherein said shell body is formed of metal, and wherein the joining step comprising joining the shell body by laser welding.
